# EUROPÄISCHE PATENTSCHRIFT

(11) **EP 3 888 947 B1**
(45) Veröffentlichungstag und Bekanntmachung des Hinweises auf die Patenterteilung: **08.03.2023**
(21) Anmeldenummer: 20210725.6
(22) Anmeldetag: 30.11.2020
(51) Int. Cl.: B60C 11/03, B60C 11/13

(54) **FAHRZEUGLUFTREIFEN**
PNEUMATIC TYRE
PNEUMATIQUE DE VÉHICULE

(30) Priorität: 30.03.2020 DE 102020204068
(43) Veröffentlichungstag der Anmeldung: 06.10.2021
(73) Patentinhaber: Continental Reifen Deutschland GmbH, 30165 Hannover (DE)
(72) Erfinder: Henze, Eugen - c/o Continental AG, 30419 Hannover (DE); Pagac, Lubomir - c/o Continental AG, 30419 Hannover (DE); Thevanayagam, Paul - c/o Continental AG, 30419 Hannover (DE)
(74) Vertreter: Continental Corporation

(56) Entgegenhaltungen:
- EP-A1- 2 447 092
- EP-A1- 2 505 387
- EP-A1- 3 620 311
- DE-A1-102017 203 011

## Beschreibung

### Fahrzeugluftreifen

Die Erfindung betrifft einen Fahrzeugluftreifen mit einem Laufstreifen mit zumindest einer an zumindest einer Seite von einer in Draufsicht gerade verlaufenden Umfangsrille begrenzten Profilrippe, welche sich über den Laufstreifenumfang aus einer Abfolge von zumindest zwei Pitches mit unterschiedlichen Umfangslängen zusammensetzt und an der Umfangsrille eine umlaufende Rippenflanke aufweist, wobei in jedem Pitch an der Rippenflanke bei der Profilrippenperipherie eine in Umfangsrichtung langgestreckte Ausnehmung ausgebildet ist, welche an der Profilrippenperipherie jeweils eine kürzere Begrenzungskante und eine gegenüber dieser längere Begrenzungskante aufweist und welche durch zwei an die Begrenzungskanten anschließende Begrenzungsflächen und eine Bodenfläche begrenzt ist, wobei die Begrenzungskanten und die Begrenzungsflächen in Draufsicht jeweils einen Winkel von 100° bis 160° einschließen.

Ein derartiger Fahrzeugluftreifen, welcher insbesondere ein Nutzfahrzeugreifen ist, ist beispielsweise aus der DE 10 2017 203 011 A1 bekannt. Der Laufstreifen dieses Reifens weist zwei schulterseitige Profilrippen auf, welche jeweils durch eine in Draufsicht gerade verlaufende Umfangsrille begrenzt sind. An den Rippenflanken der Umfangsrille sind bei der Profilrippenperipherie Ausnehmungen mit einer maximalen Umfangslänge von 70% bis 90% der Profiltiefe ausgebildet, wobei die Ausnehmungen von in Draufsicht L-förmig zueinander verlaufenden, sich in radialer Richtung erstreckenden Begrenzungsflächen und einer Bodenfläche begrenzt sind. Die eine der Begrenzungsflächen verläuft in Draufsicht zur axialen Richtung unter einem Winkel von bis zu 35°, die andere Begrenzungsfläche schließt mit der erstgenannten Begrenzungsfläche einen Winkel von 90° bis 125° ein. Die Bodenfläche befindet sich in einer Tiefe von 15% bis 25% der Profiltiefe. Die zur axialen Richtung unter einem Winkel von bis zu 35° verlaufende Begrenzungsfläche stellte eine als Traktionskante wirkende Begrenzungskante an der Profilrippenperipherie zur Verfügung. Die zweite Begrenzungsfläche weist an der Profilrippenperipherie eine im Wesentlichen in Umfangsrichtung verlaufende Begrenzungskante auf. Diese soll gemeinsam mit der Bodenfläche eine Stabilisierung der Profilrippe ermöglichen.

Der Erfindung liegt die Aufgabe zugrunde, bei einem Fahrzeugluftreifen der eingangs genannten Art die Umfangsrille vor eindringenden Steinen zu schützen, wobei gute Wasseraufnahme- und Wasserdrainageeigenschaften erhalten bleiben sollen.

Gelöst wird die gestellte Aufgabe erfindungsgemäß dadurch, dass die Ausnehmung an der Umfangsrille eine an der Profilrippenperipherie ermittelte maximale Umfangslänge von 70% bis 100% der Umfangslänge des jeweiligen Pitch aufweist, wobei die längere Begrenzungskante der Ausnehmung in Draufsicht zur Umfangsrichtung unter einem Winkel von bis zu 8° verläuft und wobei radial innerhalb der Ausnehmung in einem Abstand zu dieser an der Rippenflanke ein in Umfangsrichtung langgestreckter Vorsprung mit einer maximalen Umfangslänge von 30% bis 50% der Umfangslänge des jeweiligen Pitch ausbildet ist.

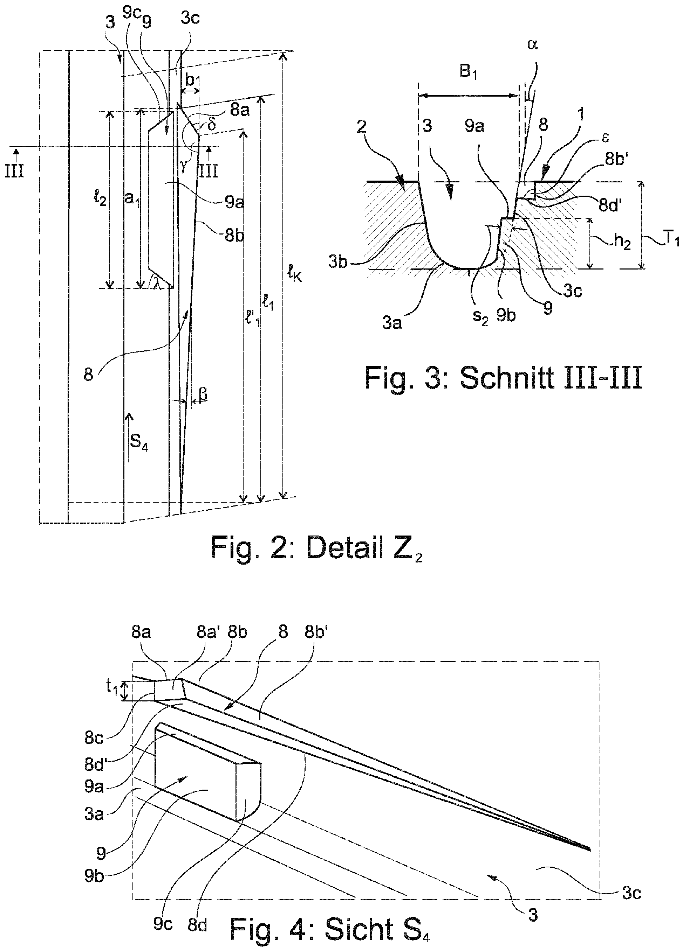

Durch die bei den Ausnehmungen ausgebildeten, langgestreckten Vorsprünge ist eine im Querschnitt stufenförmige Geometrie zur Profilrippenperipherie gebildet (Fig. 3), welche einerseits die Möglichkeit, dass Steine in diesem Bereich in die Umfangsrille eindringen deutlich verringert und andererseits den Auswurf von etwaigen in diesem Bereich eingefangenen Steinen fördert. Ferner blockieren die Vorsprünge die Fortbewegung von etwaigen in die Umfangsrille eingedrungenen Steinen, sodass die Umfangsrille, insbesondere der Rillengrund, vor Schäden besser geschützt ist. Die Länge der Ausnehmungen und der Vorsprünge ist auf die Umfangslänge des jeweiligen Pitch abgestimmt, wobei die Ausnehmungen deutlich länger als die Vorsprünge ausgeführt sind, wodurch gute Wasseraufnahme- und Wasserdrainageeigenschaften erhalten bleiben.

Gemäß einer bevorzugten Ausführung weist die längere Begrenzungskante eine Umfangslänge von zumindest 85%, insbesondere von zumindest 90%, der maximalen Umfangslänge der Ausnehmung auf. Da diese Begrenzungskante zur Umfangsrichtung unter einem Winkel von bis zu 8° verläuft, ist die Ausnehmung in Umfangsrichtung deutlich langgestreckt. Dies verbessert zusätzlich die Wasserdrainage.

Die Möglichkeit, dass Steine in die Umfangsrille eindringen, ist weiter verringert, wenn die Ausnehmung, ermittelt gegenüber dem Niveau der Rippenflanke am gegenseitigen Anschluss ihrer Begrenzungskanten, in axialer Richtung eine Breite von 1,5 mm bis 3,5 mm aufweist.

Es ist vor allem für die Wasserdrainage von Vorteil, wenn die Ausnehmung an ihrer tiefsten Stelle in radialer Richtung eine Tiefe von mindestens 1,0 mm und maximal 25% der Profiltiefe, vorzugsweise von mindestens 15% der Profiltiefe, aufweist.

Gemäß einer weiteren bevorzugten Ausführung ist die Bodenfläche der Ausnehmung derart relativ zur Profilrippenperipherie geneigt, dass die Ausnehmung eine über ihre Umfangserstreckung kontinuierlich abnehmende, in radialer Richtung ermittelte Tiefe aufweist und am an der Rippenflanke liegenden Ende der längeren Begrenzungskante ausläuft. Dadurch die Umfangsrille vor eindringenden Steinen zusätzlich geschützt.

Insbesondere ist die Wahrscheinlichkeit, dass sich in der Umfangsrille Steine verfangen, weiter reduziert, wenn die Bodenfläche der Ausnehmung mit der an die längere Begrenzungskante anschließenden Begrenzungsfläche, im Reifenquerschnitt betrachtet, einen Winkel von 90°± 3°, insbesondere von größer 90°, einschließt.

Bevorzugter Weise beträgt die maximale Umfangslänge der Ausnehmung 80% bis 95% der Umfangslänge des jeweiligen Pitch.

Die gewünschten Eigenschaften bzw. Effekte - nämlich die Wasserdrainage und der Schutz vor Steinen - sind besonders ausgewogen, wenn der Winkel, unter welchem die längere Begrenzungskante der Ausnehmung zur Umfangsrichtung verläuft, bis zu 6°, insbesondere 2° bis 4°, beträgt.

Gemäß einer weiteren bevorzugten Ausführung beträgt der Winkel, unter welchem die Begrenzungskanten der Begrenzungsflächen in Draufsicht aneinander anschließen, 140° bis 150°.

Ferner ist es bevorzugt, wenn die Begrenzungsflächen, im senkrecht zur zugehörigen Begrenzungskante ausgerichteten Querschnitt betrachtet, in radialer Richtung oder zu dieser unter einem Winkel von bis zu 1,5° verlaufen. Solche Begrenzungsflächen sind im Hinblick auf das Verhältnis zwischen dem Volumen der Ausnehmung und der an der Profilrippenperipherie ausgesparten Profilrippenoberfläche, welche die Netto-Kontaktfläche des Laufstreifen zur Fahrbahn beeinflusst, günstig.

Für die Wasserdrainage in der Umfangsrille ist es von zusätzlichem Vorteil, wenn sich der Vorsprung innerhalb eines in Umfangsrichtung gemessenen Abstandes befindet, welcher ausgehend von dem an der Rippenflanke liegenden Ende der kürzeren Begrenzungskante ermittelt ist und 60%, bevorzugt 50%, der Umfangslänge des Pitch beträgt. Der Vorsprung befindet sich daher radial innerhalb jenes Endbereiches der Ausnehmung, an welchem die Ausnehmung an der Profilrippenperipherie ihre größere Breite aufweist (siehe Fig. 2).

Für die gewünschten Eigenschaften bzw. Effekte (Wasserdrainage und Schutz vor Steinen) ist es ferner günstig, wenn der Vorsprung gegenüber dem Niveau der Rippenflanke eine Stärke aufweist, welche 8% bis 20%, insbesondere bis 15%, der Breite der Umfangsrille beträgt. Insbesondere bleibt dabei seitlich des Vorsprunges ein für die Wasserdrainage in der Umfangsrille vorteilhaft breiter Rillenbereich bzw. Rillenabschnitt vorhanden.

Gemäß einer weiteren bevorzugten Ausführung beträgt die Länge des Vorsprunges 35% bis 45% der Umfangslänge des zugehörigen Pitch.

Außerdem ist es für die gewünschten Eigenschaften bzw. Effekte (Wasserdrainage und Schutz vor Steinen) von Vorteil, wenn der Vorsprung gegenüber dem tiefsten Punkt der Umfangrille in radialer Richtung an seiner höchsten Stelle eine Höhe von 45% bis 75%, insbesondere von 57% bis 70%, der Profiltiefe aufweist.

Die Wasserdrainage in der Umfangsrille ist weiter verbessert, wenn der Vorsprung in den Umfangsrichtungen durch zwei insbesondere in radialer Richtung verlaufende Stirnflächen begrenzt ist, welche zur axialen Richtung gegensinnig zueinander schräggestellt sind und zu dieser unter vorzugsweise übereinstimmenden Winkel von 30° bis 70°, insbesondere von 40° bis 50°, verlaufen.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf einen Ausschnitt eine Laufstreifens eines Fahrzeugluftreifens mit einer Ausführungsvariante der Erfindung,
Fig. 2 eine vergrößerte Draufsicht auf das Detail Z₂ des Laufstreifens aus Fig. 1,
Fig. 3 einen Schnitt entlang der Linie III-III der Fig. 2 und
Fig. 4 eine Schrägansicht gemäß der durch den Pfeil S₄ in Fig. 2 angedeuteten Sichtrichtung.

Gemäß der Erfindung ausgeführte Fahrzeugluftreifen sind Reifen für mehrspurige Kraftfahrzeuge sowie vorzugsweise Reifen in Radialbauart für Personenkraftwagen, Vans oder Light-Trucks.

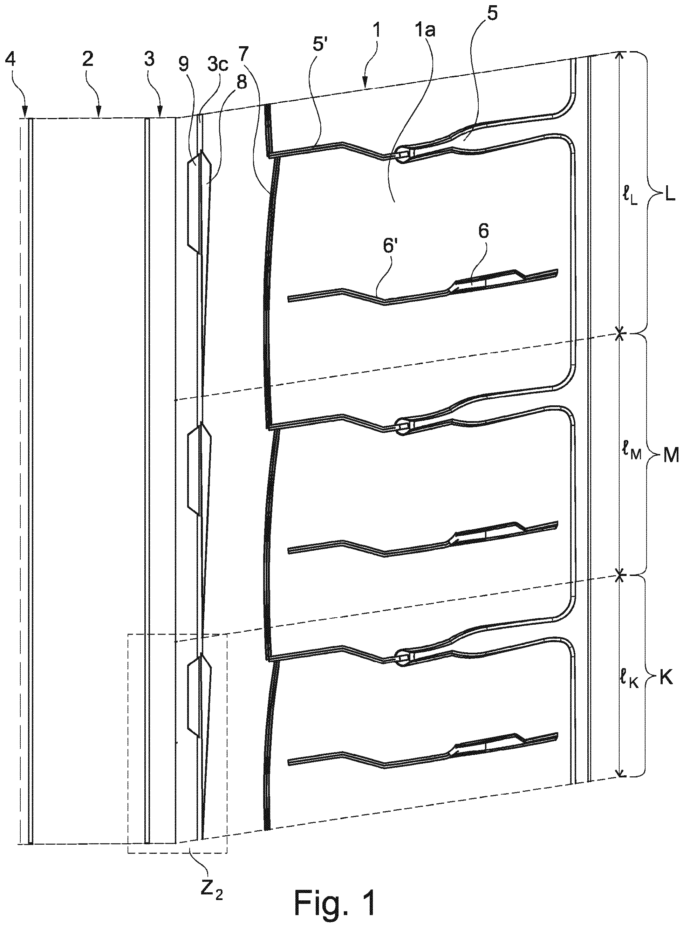

Fig. 1 zeigt einen Umfangsabschnitt der Hälfte eines Laufstreifens mit einer schulterseitigen Profilrippe 1, einer mittleren Profilrippe 2, einer die Profilrippe 1 von der Profilrippe 2 trennenden, in Draufsicht gerade verlaufenden Umfangsrille 3 und einer lediglich angedeuteten entlang des Reifenzenits verlaufenden zentralen Umfangsrille 4, welche die mittlere Profilrippe 2 zu weiteren Profilstrukturen des Laufstreifens begrenzt.

Der Laufstreifen ist gemäß einem Verfahren der Pitchlängenvariation geräuschoptimiert und setzt sich aus in Umfangsrichtung aufeinanderfolgenden Pitches - gleichartig gestalteten Profilabschnitten - zusammen, wobei beim gezeigten Ausführungsbeispiel die schulterseitige Profilrippe 1 Pitches L, M, K mit drei unterschiedlichen Umfangslängen l_{L}, l_{M}, l_{K} aufweist. In Fig. 1 ist beispielhaft eine Aufeinanderfolge eines Pitch L mit der größten Umfangslänge l_{L}, eines Pitch M mit der Umfangslänge l_{M} und eines Pitch K mit der kleinsten Umfangslänge l_{K} vorgesehen, wobei die Pitchgrenzen mit gestrichelten Linien angedeutet sind. Die Pitches L, M, K werden über den Laufstreifenumfang innerhalb einer sogenannten Pitchfolge, die üblicherweise rechnerisch ermittelt wird, angeordnet. Das Verhältnis der drei Umfangslängen l_{L} : l_{M} : l_{K} ist vorzugsweise im üblichen Bereich gewählt und beträgt beispielsweise 1,4 : 1,2 : 1,0. Die Umfangslängen l_{L}, l_{M}, l_{K} liegen insbesondere im Bereich von 15 mm bis 35 mm.

Die mittlere Profilrippe 2 ist schematisch angedeutet und kann in bekannter Weise mit Querrillen und/oder Einschnitte versehen sein. Die schulterseitige Profilrippe 1 weist blockartige Strukturen 1a auf, welche durch weitgehend parallel zueinander verlaufende Querrillen 5, an diese jeweils unmittelbar anschließende Quereinschnitte 5`, welche innerhalb der Profilrippe 1 enden, und insgesamt bogenförmig verlaufende Einschnitte 7, welche in Umfangsrichtung innerhalb der Profilrippe 1 zwischen den Endabschnitten der Quereinschnitte 5' verlaufen und von der Umfangsrille 3 beabstandet sind, gebildet sind. In jeder blockartigen Struktur 1a ist eine gegenüber der Querrille 5 schmäler ausgeführte Querrille 6 und ein an dieser anschließender Querschnittschnitt 6' ausgebildet. In jedem Pitch L, M, K befinden sich in der schulterseitigen Profilrippe 1 eine Querrille 5 und eine Querrille 6.

Gemäß Fig. 3 ist die Umfangsrille 3, im Querschnitt betrachtet, durch einen U-förmig gerundeten Rillengrund 3a, zur mittleren Profilrippe 2 durch eine Rippenflanke 3b und zur schulterseitigen Profilrippe 1 durch eine Rippenflanke 3c begrenzt. Die Rippenflanken 3b, 3c verlaufen, ebenfalls im Querschnitt der Umfangsrille 3 betrachtet, zur radialen Richtung jeweils unter einem Winkel α von beispielsweise bis zu 15°, vorzugsweise von bis zu 10°, oder alternativ in radialer Richtung. Die Umfangsrille 3 ist in radialer Richtung auf die jeweils vorgesehene Profiltiefe T₁ ausgeführt, welche für den bevorzugt vorgesehenen Reifentyp (PKW, Van, Light-Truck) insbesondere 6,5 mm bis 13,0 mm beträgt, und weist an der Laufstreifenperipherie an ihren schmälsten Stellen bzw. Abschnitten in axialer Richtung eine Breite B₁ von 6,0 mm bis 13,0 mm, insbesondere von 8,0 mm bis 12,0 mm, auf.

Gemäß Fig. 1 ist an der die schulterseitige Profilrippe 1 entlangverlaufenden Rippenflanke 3c in jedem Pitch L, M, K eine von der Profilrippenperipherie in die schulterseitige Profilrippe 1 hineinragende, in Umfangsrichtung langgestreckte und beim Ausführungsbeispiel im Wesentlichen über die gesamte Umfangslänge l_{L}, l_{M}, l_{K} des zugehörigen Pitch L, M, K verlaufende, oberflächliche Ausnehmung 8 ausgebildet. Radial innerhalb jeder Ausnehmung 8 befindet sich in einem Abstand zur Ausnehmung 8 ein in Umfangsrichtung langgestreckter, am Rillengrund 3a und an der Rippenflanke 3c angebundener flacher, plattenartiger Vorsprung 9 (vergleiche Fig. 3 und Fig. 4).

Die weitere Ausgestaltung der Ausnehmungen 8 und der Vorsprünge 9 wird nachfolgend anhand der Figuren 2 bis 4, welche die im Pitch K befindliche Ausnehmung 8 mit zugehörigem Vorsprung 9 zeigen, näher erläutert. Einige der im Anschluss erwähnten Abmessungen der Ausnehmung 8 und des Vorsprunges 9 sind von der Umfangslänge des jeweiligen Pitch abhängig. Die nachfolgend jeweils auf die Umfangslänge l_{K} des Pitch K bezugnehmenden Abmessungen gelten in den beiden anderen Pitches L, M für die zu diesen gehörenden Umfangslängen l_{L}, l_{M}.

Wie Fig. 3 zeigt, ist die Ausnehmung 8, im Querschnitt der Umfangsrille 3 betrachtet, im Wesentlichen quadratisch ausgeführt. Gemäß Fig. 4 weist die Ausnehmung 8 an der Profilrippenperipherie eine kürzere radial äußere Begrenzungskante 8a und eine gegenüber dieser längere und zur Umfangsrichtung geringer geneigte radial äußere Begrenzungskante 8b (vergleiche Fig. 2), ferner an der Umfangsrille 3 eine in radialer Richtung verlaufende Begrenzungskante 8c und eine gegenüber dieser längere, die Umfangsrille 3 entlangverlaufende radial innere Begrenzungskante 8d auf. Gemäß Fig. 2 enden die radial äußeren Begrenzungskanten 8a, 8b jeweils an der Rippenflanke 3c, wobei die längere radial äußere Begrenzungskante 8b beim gezeigten Ausführungsbeispiel an der entsprechenden Pitchgrenze endet, in Draufsicht betrachtet, zur Umfangsrichtung unter einem Winkel β von bis zu 8°, insbesondere von bis zu 6°, und bevorzugt von 2° bis 4° verläuft und mit der kürzeren radial äußeren Begrenzungskante 8a einen Winkel γ von 100° bis 160°, insbesondere von 140° bis 150°, einschließt. Bevorzugter Weise sind der Winkel β der längeren radial äußere Begrenzungskante 8b und der Winkel γ zwischen den Begrenzungskante 8a und 8b derart aufeinander abgestimmt, dass die radial äußere Begrenzungskante 8a zur Umfangsrichtung unter einem Winkel δ von bis zu 65°, vorzugsweise von bis zu 55°, verläuft. Gemäß Fig. 4 schließt die in radialer Richtung verlaufende Begrenzungskante 8c an das an der Rippenflanke 3c liegende Ende der kürzeren radial äußeren Begrenzungskante 8a an und endet gegenüber der Profilrippenperipherie in einer in radialer Richtung ermittelten Tiefe ti, welche mindestens 1,0 mm und maximal 25% der Profiltiefe Ti, vorzugsweise mindestens 15% der Profiltiefe T₁, beträgt (Profiltiefe T₁ siehe Fig. 3). Die längere, die Umfangsrille 3 entlangverlaufende radial innere Begrenzungskante 8d schließt in der Tiefe t₁ an die Begrenzungskante 8c an und verläuft unter kontinuierlicher Verringerung ihres radialen Abstandes zur Profilrippenperipherie zum an der Rippenflanke 3c liegenden Ende der längeren radial äußeren Begrenzungskante 8b.

Wie Fig. 2 ferner zeigt, weist die Ausnehmung 8 zwischen dem an der Umfangsrille 3 liegenden Ende der kürzeren radial äußere Begrenzungskante 8a und dem an der Umfangsrille 3 liegenden Ende der längeren radial äußeren Begrenzungskante 8b eine maximale Umfangslänge l₁ von 70% bis 100%, insbesondere von 80% bis 95%, der Umfangslänge l_{K} des Pitch K auf. Die längere radial äußere Begrenzungskante 8b weist eine Umfangslänge l₁' von zumindest 85%, insbesondere von zumindest 90%, der maximalen Umfangslänge l₁ der Ausnehmung 8 auf.

Ferner weist die Ausnehmung 8 an der Profilrippenperipherie am gegenseitigen Anschluss der kürzeren radial äußeren Begrenzungskante 8a und der längeren radial äußeren Begrenzungskante 8b ihre in axialer Richtung ermittelte breiteste Stelle mit der Breite b₁ auf. Die erwähnten Winkel β und γ, die maximale Umfangslänge l₁ der Ausnehmung 8 und die Umfangslänge l₁' der längeren radial äußeren Begrenzungskante 8b sind vorzugsweise derart aufeinander abgestimmt, dass die Breite b₁ der Ausnehmung 8 1,5 mm bis 3,5 mm beträgt.

Wie Fig. 4 ferner zeigt, ist die Ausnehmung 8 durch eine an die kürzere radial äußere Begrenzungskante 8a und die in radialer Richtung verlaufende Begrenzungskante 8c anschließende, im Wesentlichen rechteckige Begrenzungsfläche 8a`, eine die längere radial äußere Begrenzungskante 8b entlangverlaufende, in Umfangsrichtung langgezogene, dreieckige Begrenzungsfläche 8b` und eine die radial innere Begrenzungskante 8d entlangverlaufende, in Umfangsrichtung langgezogene, dreieckige Bodenfläche 8d` begrenzt. Die im Wesentlichen rechteckige Begrenzungsfläche 8a' und die dreieckige Begrenzungsfläche 8b` sind, im Querschnitt senkrecht zur zugehörigen radial äußere Begrenzungskante 8a, 8b betrachtet, in radialer Richtung bzw. zu dieser unter einem Winkel von bis zu 1,5° orientiert (für Begrenzungsfläche 8b` siehe Fig. 3). Die Bodenfläche 8d` schließt mit der dreieckige Begrenzungsfläche 8b` im Reifenquerschnitt betrachtet einen Winkel ε von 90°± 3°, insbesondere von größer 90°, ein (Fig. 3). Wie bereits erläutert, schließen die radial innere Begrenzungskante 8d und die längere radial äußere Begrenzungskante 8b an der Profilrippenperipherie aneinander an, sodass die Bodenfläche 8d` relativ zur Profilrippenperipherie geneigt ist und die Ausnehmungen 8 - jeweils ausgehend von der im Wesentlichen rechteckigen Begrenzungsfläche 8a` - eine entlang der radial inneren Begrenzungskante 8d kontinuierlich abnehmende Tiefe und eine entlang der längeren radial äußere Begrenzungskante 8b kontinuierlich abnehmende Querschnittsfläche (in axialer Richtung ausgerichteter Querschnitt) aufweisen.

Gemäß Fig. 2 befindet sich der bereits erwähnte, radial innerhalb der Ausnehmung 8 ausgebildete, flache plattenartige Vorsprung 9 innerhalb eines in Umfangsrichtung gemessenen Abstandes a₁, welcher ausgehend von dem an der Rippenflanke 3c liegenden Ende der kürzeren radial äußeren Begrenzungskante 8a ermittelt ist und 60%, bevorzugt 50%, der Umfangslänge l_{K} des Pitch K beträgt.

Der Vorsprung 9 weist eine gegenüber dem und senkrecht zum Niveau der Rippenflanke 3c ermittelte Stärke s₂ (Fig. 3) von 8% bis 20%, insbesondere bis 15%, der B₁ der Umfangsrille 3, eine am Niveau der Rippenflanke 3c sowie in Umfangsrichtung ermittelte maximale Länge l₂ (Fig. 2) von 30% bis 50%, insbesondere von 35% bis 45%, der Umfangslänge l_{K} des Pitch K und eine gegenüber dem tiefsten Punkt der Umfangsrille 3 (Niveau der Profiltiefe) in radialer Richtung ermittelte Höhe h₂ (Fig. 3) von 45% bis 75%, insbesondere von 57% bis 70%, der Profiltiefe T₁ auf. Wie Fig. 2 bis Fig. 4 in Kombination miteinander zeigen, ist der Vorsprung 9 in der Höhe h₂ (Fig. 3) durch eine parallel zur Laufstreifenperipherie verlaufende trapezförmige Deckfläche 9a, axial seitlich durch eine parallel zur Rippenflanke 3c ausgerichtete Seitenfläche 9b (Fig. 3) und in den Umfangsrichtungen durch zwei in radialer Richtung verlaufende Stirnflächen 9c (Fig. 2, Fig. 4) begrenzt. Wie Fig. 2 zeigt, sind die Stirnflächen 9c zur axialen Richtung gegensinnig zueinander schräggestellt und verlaufen zu dieser unter vorzugsweise übereinstimmenden Winkel λ von 30° bis 70°, insbesondere von 40° bis 50°.

Die Erfindung ist auf das beschriebene Ausführungsbeispiel nicht beschränkt.

Die beschriebenen Ausnehmungen und Vorsprünge können auch an Rippenflanken von mittleren Profilrippen ausgebildet sein. Bevorzugter Weise weisen die Profilrippen, an deren Rippenflanken die Ausnehmungen und Vorsprünge vorgesehen sind, keine Einschnitte und Querrillen auf, welche an der die Ausnehmungen und Vorsprünge aufweisenden Rippenflanke austreten. Insbesondere weist die Profilrippe Einschnitte und/oder Rillen auf, welche von der die Ausnehmungen und Vorsprünge aufweisenden Rippenflanke enden. Die Kanten der Vorsprünge können mit Fasen (Schrägflächen) mit einer Breite von insbesondere bis zu 1,0 mm versehen sein. Ferner kann die Deckfläche der Vorsprünge zur radialen Richtung unter einem Winkel von bis zu 25° geneigt sein. Bevorzugter Weise sind die Vorsprüngen mit Übergangsrundungen versehen, welche zur Rippenflanke und zum Rillengrund verlaufen.

### Bezugszeichenliste

- 1: schulterseitige Profilrippe
- 1a: blockartige Profilstruktur
- 2: mittlere Profilrippe
- 3: Umfangsrille
- 3a: Rillengrund
- 3b: Rippenflanke
- 3c: Rippenflanke
- 4: zentrale Umfangsrille
- 5: Querrille
- 5': Quereinschnitt
- 6: Querrille
- 6': Quereinschnitt
- 7: Einschnitt
- 8: Ausnehmung
- 8a: kürzere radial äußere Begrenzungskante
- 8a': rechteckige Begrenzungsfläche
- 8b: längere radial äußere Begrenzungskante
- 8b': dreieckige Begrenzungsfläche
- 8c: in radialer Richtung verlaufende Begrenzungskante
- 8d: radial innere Begrenzungskante
- 8d: Bodenfläche
- 9: Vorsprung
- 9a: Deckfläche
- 9b: Seitenfläche
- 9c: Stirnfläche
- a₁: Abstand
- B₁, b₁: Breite
- h₂: Höhe
- L, M, K: Pitch
- l_{L}, l_{M}, l_{K}: Umfangslänge
- l₁: maximale Umfangslänge
- l₁': Umfangslänge
- l₂: maximale Länge
- s₂: Stärke
- S₄: Sichtrichtung
- t₁: Tiefe
- T₁: Profiltiefe
- Z₂: Detail
- α, β, γ, δ, ε, λ: Winkel

## Patentansprüche

1. Fahrzeugluftreifen mit einem Laufstreifen mit zumindest einer an zumindest einer Seite von einer in Draufsicht gerade verlaufenden Umfangsrille (3) begrenzten Profilrippe (1), welche sich über den Laufstreifenumfang aus einer Abfolge von zumindest zwei Pitches (L, M, K) mit unterschiedlichen Umfangslängen (l_{L}, l_{M}, l_{K}) zusammensetzt und an der Umfangsrille (3) eine umlaufende Rippenflanke (3c) aufweist, wobei in jedem Pitch an der Rippenflanke (3c) bei der Profilrippenperipherie eine in Umfangsrichtung langgestreckte Ausnehmung (8) ausgebildet ist, welche an der Profilrippenperipherie jeweils eine kürzere Begrenzungskante (8a) und eine gegenüber dieser längere Begrenzungskante (8b) aufweist und welche durch zwei an die Begrenzungskanten (8a, 8b) anschließende Begrenzungsflächen (8a', 8b') und eine Bodenfläche (8d') begrenzt ist, wobei die Begrenzungskanten (8a, 8b) und die Begrenzungsflächen (8a', 8b') in Draufsicht jeweils einen Winkel (γ) von 100° bis 160° einschließen, **dadurch gekennzeichnet,**
**dass** die Ausnehmung (8) an der Umfangsrille (3) eine an der Profilrippenperipherie ermittelte maximale Umfangslänge (l₁) von 70% bis 100% der Umfangslänge (l_{L}, l_{M}, l_{K}) des jeweiligen Pitch (L, M, K) aufweist, wobei die längere Begrenzungskante (8b) der Ausnehmung (8) in Draufsicht zur Umfangsrichtung unter einem Winkel (β) von bis zu 8° verläuft und wobei radial innerhalb der Ausnehmung (8) in einem Abstand zu dieser an der Rippenflanke (3c) ein in Umfangsrichtung langgestreckter Vorsprung (9) mit einer maximalen Umfangslänge (l₂) von 30% bis 50% der Umfangslänge (l_{L}, l_{M}, l_{K}) des jeweiligen Pitch (L, M, K) ausbildet ist.

2. Fahrzeugluftreifen nach Anspruch 1, **dadurch gekennzeichnet, dass** die längere Begrenzungskante (8b) eine Umfangslänge (l₁') von zumindest 85%, insbesondere von zumindest 90%, der maximalen Umfangslänge (l₁) der Ausnehmung (8) aufweist.

3. Fahrzeugluftreifen nach Anspruch 1 oder 2, **dadurch gekennzeichnet, dass** die Ausnehmung (8) ermittelt gegenüber dem Niveau der Rippenflanke (3c) am gegenseitigen Anschluss ihrer Begrenzungskanten (8a, 8b) in axialer Richtung eine Breite (bi) von 1,5 mm bis 3,5 mm aufweist

4. Fahrzeugluftreifen nach einem der Ansprüche 1 bis 3, **dadurch gekennzeichnet, dass** die Ausnehmung (8) an ihrer tiefsten Stelle in radialer Richtung eine Tiefe (t₁) von mindestens 1,0 mm und maximal 25% der Profiltiefe (T₁), vorzugsweise von mindestens 15% der Profiltiefe (T₁), aufweist.

5. Fahrzeugluftreifen nach einem der Ansprüche 1 bis 4, **dadurch gekennzeichnet, dass** die Bodenfläche (8d') der Ausnehmung (8) derart relativ zur Profilrippenperipherie geneigt ist, dass die Ausnehmung (8) eine über ihre Umfangserstreckung kontinuierlich abnehmende, in radialer Richtung ermittelte Tiefe aufweist und am an der Rippenflanke (3c) liegenden Ende der längeren Begrenzungskante (8b) ausläuft.

6. Fahrzeugluftreifen nach einem der Ansprüche 1 bis 5, **dadurch gekennzeichnet, dass** die Bodenfläche (8d') der Ausnehmung (8) mit der an die längere Begrenzungskante (8b) anschließenden Begrenzungsfläche (8b'), im Reifenquerschnitt betrachtet, einen Winkel (ε) von 90°± 3°, insbesondere von größer 90°, einschließt.

7. Fahrzeugluftreifen nach einem der Ansprüche 1 bis 6, **dadurch gekennzeichnet, dass** die maximale Umfangslänge (h) der Ausnehmung (8) 80% bis 95% der Umfangslänge (l_{L}, l_{M}, l_{K}) des Pitch (L, M, K) beträgt.

8. Fahrzeugluftreifen nach einem der Ansprüche 1 bis 7, **dadurch gekennzeichnet, dass** der Winkel (β), unter welchem die längere Begrenzungskante (8b) der Ausnehmung (8) zur Umfangsrichtung verläuft, bis zu 6°, insbesondere 2° bis 4°, beträgt.

9. Fahrzeugluftreifen nach einem der Ansprüche 1 bis 8, **dadurch gekennzeichnet, dass** der Winkel (γ), unter welchem die Begrenzungskanten (8a, 8b) der Begrenzungsflächen (8a', 8b') in Draufsicht aneinander anschließen, 140° bis 150° beträgt.

10. Fahrzeugluftreifen nach einem der Ansprüche 1 bis 9, **dadurch gekennzeichnet, dass** die Begrenzungsflächen (8a', 8b'), im senkrecht zur zugehörigen Begrenzungskante (8a, 8b) ausgerichteten Querschnitt betrachtet, in radialer Richtung oder zu dieser unter einem Winkel von bis zu 1,5° verlaufen.

11. Fahrzeugluftreifen nach einem der Ansprüche 1 bis 10, **dadurch gekennzeichnet, dass** sich der Vorsprung (9) innerhalb eines in Umfangsrichtung gemessenen Abstandes (a₁) befindet, welcher ausgehend von dem an der Rippenflanke (3c) liegenden Ende der kürzeren Begrenzungskante (8a) ermittelt ist und 60%, bevorzugt 50%, der Umfangslänge (l_{L}, l_{M}, l_{K}) des Pitch (L, M, K) beträgt.

12. Fahrzeugluftreifen nach einem der Ansprüche 1 bis 11, **dadurch gekennzeichnet, dass** der Vorsprung (9) gegenüber dem Niveau der Rippenflanke (3c) eine Stärke (s₂) aufweist, welche 8% bis 20%, insbesondere bis 15%, der Breite (B₁) der Umfangsrille (3) beträgt.

13. Fahrzeugluftreifen nach einem der Ansprüche 1 bis 12, **dadurch gekennzeichnet, dass** die Länge (lz) des Vorsprunges (9) 35% bis 45% der Umfangslänge (l_{L}, l_{M}, l_{K}) des zugehörigen Pitch (L, M, K) beträgt.

14. Fahrzeugluftreifen nach einem der Ansprüche 1 bis 13, **dadurch gekennzeichnet, dass** der Vorsprung (9) gegenüber dem tiefsten Punkt der Umfangrille (3) in radialer Richtung an seiner höchsten Stelle eine Höhe (h₂) von 45% bis 75%, insbesondere von 57% bis 70%, der Profiltiefe (T₁) aufweist.

15. Fahrzeugluftreifen nach einem der Ansprüche 1 bis 14, **dadurch gekennzeichnet, dass** der Vorsprung (9) in den Umfangsrichtungen durch zwei insbesondere in radialer Richtung verlaufende Stirnflächen (9c) begrenzt ist, welche zur axialen Richtung gegensinnig zueinander schräggestellt sind und zu dieser unter vorzugsweise übereinstimmenden Winkel (λ) von 30° bis 70°, insbesondere von 40° bis 50°, verlaufen.

## Claims

1. Pneumatic vehicle tyre having a tread with at least one profile rib (1), which is delimited on at least one side by a circumferential groove (3) running in a straight line in plan view, which, over the tread circumference, is composed of a sequence of at least two pitches (L, M, K) with different circumferential lengths (l_{L}, l_{M}, l_{K}), and which has an encircling rib flank (3c) on the circumferential groove (3), wherein in each pitch on the rib flank (3c) at the profile rib periphery there is formed a circumferentially elongate recess (8), which, at the profile rib periphery, has a respective shorter boundary edge (8a) and longer boundary edge (8b) than said shorter boundary edge and which is delimited by two boundary surfaces (8a', 8b'), adjoining the boundary edges (8a, 8b), and a base surface (8d'), wherein the boundary edges (8a, 8b) and the boundary surfaces (8a', 8b') form a respective angle (γ) of 100° to 160° in plan view,
**characterized in that**
the recess (8) in the circumferential groove (3) has a maximum circumferential length (l₁), determined at the profile rib periphery, of 70% to 100% of the circumferential length (l_{L}, l_{M}, l_{K}) of the respective pitch (L, M, K), wherein the longer boundary edge (8b) of the recess (8) runs at an angle (β) of up to 8° in relation to the circumferential direction in plan view, and wherein, radially on the inside of the recess (8) and spaced apart therefrom on the rib flank (3c), there is formed a circumferentially elongate projection (9) with a maximum circumferential length (l₂) of 30% to 50% of the circumferential length (l_{L}, l_{M}, l_{K}) of the respective pitch (L, M, K).

2. Pneumatic vehicle tyre according to Claim 1, **characterized in that** the longer boundary edge (8b) has a circumferential length (l₁') of at least 85%, in particular at least 90%, of the maximum circumferential length (l₁) of the recess (8).

3. Pneumatic vehicle tyre according to Claim 1 or 2, **characterized in that** the recess (8) has a width (b₁) of 1.5 mm to 3.5 mm as determined with respect to the level of the rib flank (3c) at the mutual connection point of its boundary edges (8a, 8b) in an axial direction.

4. Pneumatic vehicle tyre according to one of Claims 1 to 3, **characterized in that** the recess (8), at its deepest point in the radial direction, has a depth (t₁) of at least 1.0 mm and at most 25% of the tread pattern depth (T₁), preferably at least 15% of the tread pattern depth (T₁).

5. Pneumatic vehicle tyre according to one of Claims 1 to 4, **characterized in that** the base surface (8d') of the recess (8) is inclined relative to the profile rib periphery in such a way that the recess (8) has a depth, determined in the radial direction, that decreases continuously over the circumferential extent of the recess and runs out at that end of the longer boundary edge (8b) that lies on the rib flank (3c).

6. Pneumatic vehicle tyre according to one of Claims 1 to 5, **characterized in that** the base surface (8d') of the recess (8) forms an angle (ε) of 90°±3°, in particular greater than 90°, as seen in the cross section of the tyre, with the boundary surface (8b') adjoining the longer boundary edge (8b).

7. Pneumatic vehicle tyre according to one of Claims 1 to 6, **characterized in that** the maximum circumferential length (l₁) of the recess (8) is 80% to 95% of the circumferential length (l_{L}, l_{M}, l_{K}) of the pitch (L, M, K).

8. Pneumatic vehicle tyre according to one of Claims 1 to 7, **characterized in that** the angle (β) at which the longer boundary edge (8b) of the recess (8) runs in relation to the circumferential direction is up to 6°, in particular 2° to 4°.

9. Pneumatic vehicle tyre according to one of Claims 1 to 8, **characterized in that** the angle (γ) at which the boundary edges (8a, 8b) of the boundary surfaces (8a', 8b') adjoin one another in plan view is 140° to 150°.

10. Pneumatic vehicle tyre according to one of Claims 1 to 9, **characterized in that** the boundary surfaces (8a', 8b') run at an angle of up to 1.5° in the radial direction or in relation thereto, as viewed in the cross section oriented perpendicularly to the associated boundary edge (8a, 8b).

11. Pneumatic vehicle tyre according to one of Claims 1 to 10, **characterized in that** the projection (9) is located within a distance (a₁), measured in the circumferential direction, which is determined from that end of the shorter boundary edge (8a) that is on the rib flank (3c) and which is 60%, preferably 50%, of the circumferential length (l_{L}, l_{M}, l_{K}) of the pitch (L, M, K).

12. Pneumatic vehicle tyre according to one of Claims 1 to 11, **characterized in that** the projection (9), with respect to the level of the rib flank (3c), has a thickness (s₂) which is 8% to 20%, in particular to 15%, of the width (B₁) of the circumferential groove (3).

13. Pneumatic vehicle tyre according to one of Claims 1 to 12, **characterized in that** the length (l₂) of the projection (9) is 35% to 45% of the circumferential length (l_{L}, l_{M}, l_{K}) of the associated pitch (L, M, K).

14. Pneumatic vehicle tyre according to one of Claims 1 to 13, **characterized in that**, at its highest point, the projection (9) has a height (h₂) of 45% to 75%, in particular 57% to 70%, of the tread pattern depth (T₁) with respect to the deepest point of the circumferential groove (3) in the radial direction.

15. Pneumatic vehicle tyre according to one of Claims 1 to 14, **characterized in that**, in the circumferential directions, the projection (9) is delimited by two end faces (9c), which in particular run in the radial direction, which are slanted in relation to the axial direction in opposite directions to one another, and which run at a preferably matching angle (λ) of 30° to 70°, in particular 40° to 50°, in relation to said axial direction.

## Revendications

1. Pneumatique de véhicule comprenant une bande de roulement avec au moins une nervure profilée (1) délimitée sur au moins un côté par une rainure circonférentielle (3) s'étendant de manière rectiligne en vue de dessus, qui se compose sur la circonférence de la bande de roulement d'une succession d'au moins deux pas (L, M, K) avec des longueurs circonférentielles (IL, IM, IK) différentes et présente sur la rainure circonférentielle (3) un flanc de nervure circonférentiel (3c) ; dans chaque pas, sur le flanc de nervure (3c), à la périphérie de la nervure profilée, étant formé un évidement (8) allongé dans la direction circonférentielle, qui présente à la périphérie de la nervure profilée respectivement un bord de délimitation plus court (8a) et un bord de délimitation plus long (8b) par rapport à celui-ci et qui est délimité par deux surfaces de délimitation (8a', 8b') se raccordant aux bords de délimitation (8a, 8b) et une surface de fond (8d'), les bords de délimitation (8a, 8b) et les surfaces de délimitation (8a', 8b') formant chacun en vue de dessus un angle (γ) de 100° à 160°,
**caractérisé en ce que**
l'évidement (8) sur la rainure circonférentielle (3) présente une longueur circonférentielle maximale (11), déterminée sur la périphérie de la nervure profilée, de 70 % à 100 % de la longueur circonférentielle (IL, IM, IK) du pas respectif (L, M, K), le bord de délimitation plus long (8b) de l'évidement (8) s'étendant, en vue de dessus, par rapport à la direction circonférentielle, selon un angle (β) de jusqu'à 8° et, radialement à l'intérieur de l'évidement (8), à une distance de celui-ci, sur le flanc de nervure (3c), étant formée une saillie (9) allongée dans la direction circonférentielle, ayant une longueur circonférentielle maximale (l2) de 30 % à 50 % de la longueur circonférentielle (IL, IM, IK) du pas respectif (L, M, K).

2. Pneumatique de véhicule selon la revendication 1, **caractérisé en ce que** le bord de délimitation plus long (8b) présente une longueur circonférentielle (l1') d'au moins 85 %, notamment d'au moins 90 %, de la longueur circonférentielle maximale (11) de l'évidement (8).

3. Pneumatique de véhicule selon la revendication 1 ou 2, **caractérisé en ce que** l'évidement (8) présente une largeur (b1), déterminée par rapport au niveau du flanc de nervure (3c) au raccordement mutuel de ses bords de délimitation (8a, 8b) dans la direction axiale, de 1,5 mm à 3,5 mm.

4. Pneumatique de véhicule selon l'une quelconque des revendications 1 à 3, **caractérisé en ce que** l'évidement (8) présente à son point le plus profond dans la direction radiale une profondeur (t1) d'au moins 1,0 mm et d'au maximum 25 % de la profondeur de profilé (T1), de préférence d'au moins 15 % de la profondeur de profilé (T1).

5. Pneumatique de véhicule selon l'une quelconque des revendications 1 à 4, **caractérisé en ce que** la surface de fond (8d') de l'évidement (8) est inclinée par rapport à la périphérie de la nervure profilée de telle sorte que l'évidement (8) présente une profondeur, déterminée dans la direction radiale, qui diminue de manière continue sur son étendue circonférentielle et se termine à l'extrémité du bord de délimitation plus long (8b) située sur le flanc de nervure (3c).

6. Pneumatique de véhicule selon l'une quelconque des revendications 1 à 5, **caractérisé en ce que** la surface de fond (8d') de l'évidement (8) forme avec la surface de délimitation (8b') se raccordant au bord de délimitation plus long (8b), considérées dans la section transversale du pneumatique, un angle (ε) de 90°± 3°, notamment de plus de 90°.

7. Pneumatique de véhicule selon l'une quelconque des revendications 1 à 6, **caractérisé en ce que** la longueur circonférentielle maximale (11) de l'évidement (8) représente 80 % à 95 % de la longueur circonférentielle (IL, IM, IK) du pas (L, M, K).

8. Pneumatique de véhicule selon l'une quelconque des revendications 1 à 7, **caractérisé en ce que** l'angle (β) selon lequel le bord de délimitation plus long (8b) de l'évidement (8) s'étend par rapport à la direction circonférentielle est de jusqu'à 6°, notamment 2° à 4°.

9. Pneumatique de véhicule selon l'une quelconque des revendications 1 à 8, **caractérisé en ce que** l'angle (γ) selon lequel les bords de délimitation (8a, 8b) des surfaces de délimitation (8a', 8b') se raccordent l'un à l'autre en vue de dessus est de 140° à 150°.

10. Pneumatique de véhicule selon l'une quelconque des revendications 1 à 9, **caractérisé en ce que** les surfaces de délimitation (8a', 8b'), considérées dans la section transversale orientée perpendiculairement au bord de délimitation (8a, 8b) correspondant, s'étendent dans la direction radiale ou selon un angle de jusqu'à 1,5° par rapport à celle-ci.

11. Pneumatique de véhicule selon l'une quelconque des revendications 1 à 10, **caractérisé en ce que** la saillie (9) se trouve à l'intérieur d'une distance (a1) mesurée dans la direction circonférentielle, qui est déterminée à partir de l'extrémité du bord de délimitation plus court (8a) située sur le flanc de nervure (3c) et qui représente 60 %, de préférence 50 %, de la longueur circonférentielle (IL, IM, IK) du pas (L, M, K).

12. Pneumatique de véhicule selon l'une quelconque des revendications 1 à 11, **caractérisé en ce que** la saillie (9) présente, par rapport au niveau du flanc de nervure (3c), une épaisseur (s2) qui représente 8 % à 2 0%, notamment jusqu'à 15 %, de la largeur (B1) de la rainure circonférentielle (3).

13. Pneumatique de véhicule selon l'une quelconque des revendications 1 à 12, **caractérisé en ce que** la longueur (l2) de la saillie (9) représente 35 % à 45 % de la longueur circonférentielle (IL, IM, IK) du pas correspondant (L, M, K).

14. Pneumatique de véhicule selon l'une quelconque des revendications 1 à 13, **caractérisé en ce que** la saillie (9) présente, par rapport au point le plus profond de la rainure circonférentielle (3) dans la direction radiale, à son point le plus haut, une hauteur (h2) de 45 % à 75 %, notamment de 57 % à 70 %, de la profondeur de profilé (T1).

15. Pneumatique de véhicule selon l'une quelconque des revendications 1 à 14, **caractérisé en ce que** la saillie (9) est délimitée dans les directions circonférentielles par deux surfaces frontales (9c) s'étendant notamment dans la direction radiale, qui sont inclinées l'une par rapport à l'autre en sens inverse par rapport à la direction axiale et s'étendent par rapport à celle-ci selon des angles (λ) de préférence concordants de 30° à 70°, notamment de 40° à 50°.
